# EUROPEAN PATENT APPLICATION

(11) **EP 3 876 197 A2**
(43) Date of publication of application: **08.09.2021**
(21) Application number: 21187644.6
(22) Date of filing: 26.07.2021
(51) Int. Cl.: G06T 7/11, G06T 7/149

(54) **PORTRAIT EXTRACTING METHOD AND APPARATUS, ELECTRONIC DEVICE AND STORAGE MEDIUM**

(30) Priority: 20.01.2021 CN 202110078150
(71) Applicant: BEIJING BAIDU NETCOM SCIENCE AND TECHNOLOGY CO. LTD., 100085 Beijing (CN)
(72) Inventor: Chen, Qu, Beijing, 100085 (CN); Ye, Xiaoqing, Beijing, 100085 (CN); Zou, Zhikang, Beijing, 100085 (CN); Sun, Hao, Beijing, 100085 (CN)
(74) Representative: Maiwald Patent- und Rechtsanwaltsgesellschaft mbH

(57) **Abstract**

The disclosure provides a portrait extracting method, a portrait extracting apparatus, an electronic device and a storage medium, and relates to the field of artificial intelligence technologies such as computer vision technologies and deep learning technologies. The method includes: obtaining (101) an image to be processed; obtaining (102) a semantic segmentation result and an instance segmentation result of the image; fusing (103) the mask image of the at least one portrait and the mask image of the portrait area to generate a fused mask image of the at least one portrait; and extracting (104) the at least one portrait in the image based on the fused mask image of the at least one portrait.

## Description

### TECHNICAL FIELD

The disclosure relates to a field of image processing technologies, specially a field of artificial intelligence technologies such as computer vision technologies and deep learning technologies, and in particular to a portrait extracting method, a portrait extracting apparatus, an electronic device and a storage medium.

### BACKGROUND

Currently, the portrait extracting method facing natural scenes is mainly to obtain a mask image of each portrait in an image based on an instance segmentation method, in order to extract portraits. In the above method, due to limitations of resolution and calculation amount of an instance segmentation model, segmented edges of portraits in the mask image are often not fine enough, and accuracy of extracting portraits is poor.

### SUMMARY

The embodiments of the disclosure provide a portrait extracting method, a portrait extracting apparatus, an electronic device and a storage medium.

Embodiments of the disclosure in a first aspect provide a portrait extracting method. The method includes: obtaining an image to be processed; obtaining a semantic segmentation result and an instance segmentation result of the image, in which the semantic segmentation result includes a mask image of a portrait area of the image, and the instance segmentation result includes a mask image of at least one portrait in the image; fusing the mask image of the at least one portrait and the mask image of the portrait area to generate a fused mask image of the at least one portrait; and extracting the at least one portrait in the image based on the fused mask image of the at least one portrait.

Embodiments of the disclosure in a second aspect provide a portrait extracting apparatus. The apparatus includes: an obtaining module, a fusing module and an extracting module. The obtaining module is configured to obtain an image to be processed, and obtain a semantic segmentation result and an instance segmentation result of the image, in which the semantic segmentation result includes a mask image of a portrait area of the image, and the instance segmentation result includes a mask image of at least one portrait in the image. The fusing module is configured to fuse the mask image of the at least one portrait and the mask image of the portrait area to generate a fused mask image of the at least one portrait. The extracting module is configured to extract the at least one portrait in the image based on the fused mask image of the at least one portrait.

Embodiments of the disclosure in a third aspect provide an electronic device. The electronic device includes: at least one processor and a memory communicatively coupled to the at least one processor. The memory stores instructions executable by the at least one processor. When the instructions are implemented by the at least one processor, the at least one processor is caused to implement the portrait extracting method according to embodiments of the disclosure.

Embodiments of the disclosure in a fourth aspect provide a non-transitory computer-readable storage medium storing computer instructions. The computer instructions are used to cause the computer to implement the portrait extracting method according to embodiments of the disclosure.

Embodiments of the disclosure in a fifth aspect provide a computer program product including computer programs, and when the computer programs are executed by a processor, the portrait extracting method according to embodiments of the disclosure is implemented.

It should be understood that the content described in this section is not intended to identify key or important features of the embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure, in which:
FIG. 1 is a schematic diagram according to a first embodiment of the disclosure.
FIG. 2 is a schematic diagram of an image to be processed.
FIG. 3 is a schematic diagram of a mask image of a portrait area.
FIG. 4 is a schematic diagram of a mask image of at least one portrait.
FIG. 5 is a schematic diagram of a fused mask image of at least one portrait.
FIG. 6 is a schematic diagram of an image including at least one portrait at a moved location.
FIG. 7 is a schematic diagram according to a second embodiment of the disclosure.
FIG. 8 is a schematic diagram according to a third embodiment of the disclosure.
FIG. 9 is a block diagram of an electronic device used to implement the portrait extracting method according to an embodiment of the disclosure.

### DETAILED DESCRIPTION

The following describes the exemplary embodiments of the disclosure with reference to the accompanying drawings, which includes various details of the embodiments of the disclosure to facilitate understanding, which shall be considered merely exemplary. Therefore, those of ordinary skill in the art should recognize that various changes and modifications can be made to the embodiments described herein without departing from the scope and spirit of the disclosure. For clarity and conciseness, descriptions of well-known functions and structures are omitted in the following description.

The disclosure provides a portrait extracting method, a portrait extracting apparatus, an electronic device and a storage medium of the embodiments of the disclosure with reference to the accompanying drawings.

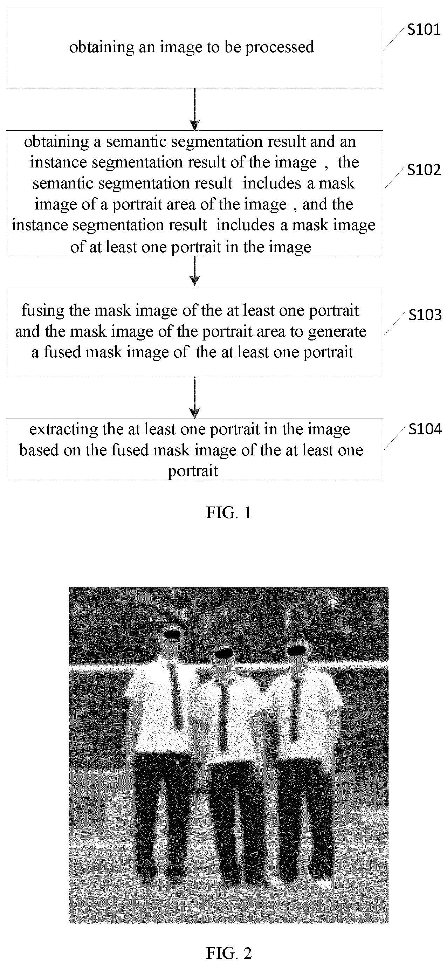

FIG. 1 is a schematic diagram according to a first embodiment of the disclosure. It should be noted that an execution subject of the embodiments of the disclosure is a portrait extracting apparatus, and the portrait extracting apparatus may specifically be a hardware device, or software in a hardware device.

As illustrated in FIG. 1, the portrait extracting method is implemented by the following steps.

In step 101, an image to be processed is obtained.

In an embodiment, the image to be processed may be an image including portraits. After obtaining the image to be processed, in order to facilitate subsequent processing of the image and improve processing efficiency of the image, the image may be scaled according to a preset size to obtain an image in the preset size. In the preset size, the long side may be of 1280 pixels. In the disclosure, scaling process of the image may be a scaling process performed while maintaining a length-width ratio of the image.

In step 102, a semantic segmentation result and an instance segmentation result of the image are obtained, in which the semantic segmentation result includes a mask image of a portrait area of the image, and the instance segmentation result includes a mask image of at least one portrait in the image.

In an embodiment, in order to improve the accuracy of the semantic segmentation result and the instance segmentation result, the process of performing step 102 by the portrait extracting apparatus may be, for example, inputting the image into a semantic segmentation model to obtain the semantic segmentation result of the image; inputting the image into an instance segmentation model to obtain the instance segmentation result of the image.

In an embodiment, the output of the semantic segmentation model may be a label to which each pixel in the image belongs, where the labels may be people, trees, grass and sky. According to the label to which each pixel in the image belongs, the mask image of the portrait area in the image is determined. In the mask image, the value of pixels in the portrait area may be 1, for example, and the value of pixels included in the non-portrait area may be 0.

In the embodiment, the output of the instance segmentation model may be the label and instance to which each pixel in the image belongs, where the instances, for example, are portrait A, portrait B and portrait C. According to the label and instance to which each pixel in the image belongs, the mask image of at least one portrait in the image may be determined. In the mask image, the value of pixels included in the portrait may be 1, for example, and the value of pixel not included in the portrait may be, 0.

In step 103, the mask image of the at least one portrait and the mask image of the portrait area are fused to generate a fused mask image of the at least one portrait.

In an embodiment, the mask image of the portrait area in the semantic segmentation result has fine segmented edges, but different portraits are not segmented. In the instance segmentation result, different portraits are segmented, but the segmented edges are not fine enough. Therefore, the mask image of at least one portrait and the mask image of the portrait area are fused to generate a fused mask image of at least one portrait, to improve the fineness of the segmented edges on the premise of segmenting different portraits.

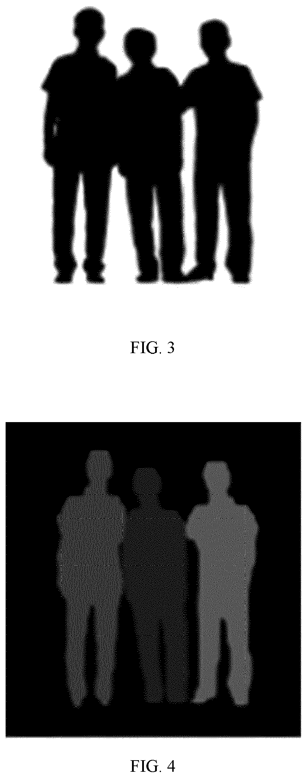

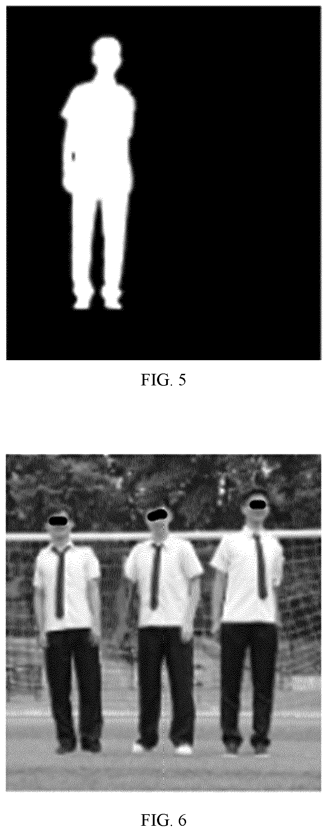

FIG. 2 is a schematic diagram of an image to be processed. FIG. 3 is a schematic diagram of a mask image of a portrait area. FIG. 4 is a schematic diagram of a mask image of at least one portrait. FIG. 5 is a schematic diagram of a fused mask image of at least one portrait.

In step 104, the at least one portrait in the image is extracted based on the fused mask image of the at least one portrait.

In an embodiment, the at least one portrait in the image is extracted based on the fused mask image of the at least one portrait.

In an implementation scenario, after step 104, the method further includes: obtaining a de-occluded background image corresponding to the image; determining a target location of the at least one portrait; and generating an image including the at least one portrait at a moved location based on the de-occluded background image, the at least one portrait, and the corresponding target location.

The manner of obtaining the de-occluded background image corresponding to the image may be, for example, using image restoration (also known as inpainting) to perform background restoration on the image to obtain the de-occluded background image corresponding to the image. FIG. 6 is a schematic diagram of an image including at least one portrait at a moved location.

In another implementation scenario, after step 104, the method further includes: obtaining a de-occluded background image corresponding to the image; determining a first portrait to be added to the de-occluded background image from the at least one portrait, and a target location of the first portrait; and generating an image containing the first portrait based on the de-occluded background image, the first portrait, and the corresponding target location.

The number of first portraits to be added to the de-occluded background image may be one or more.

In conclusion, the image to be processed is obtained, the semantic segmentation result and the instance segmentation result of the image are obtained. The semantic segmentation result includes a mask image of a portrait area of the image, and the instance segmentation result includes a mask image of at least one portrait in the image, the mask image of the at least one portrait and the mask image of the portrait area are fused to generate the fused mask image of the at least one portrait, and the at least one portrait in the image is extracted based on the fused mask image of the at least one portrait. By combining the semantic segmentation result with the instance segmentation result, the fineness of the segmented edges is improved on the premise of segmenting different portraits in the image, thereby improving the accuracy of portrait extraction.

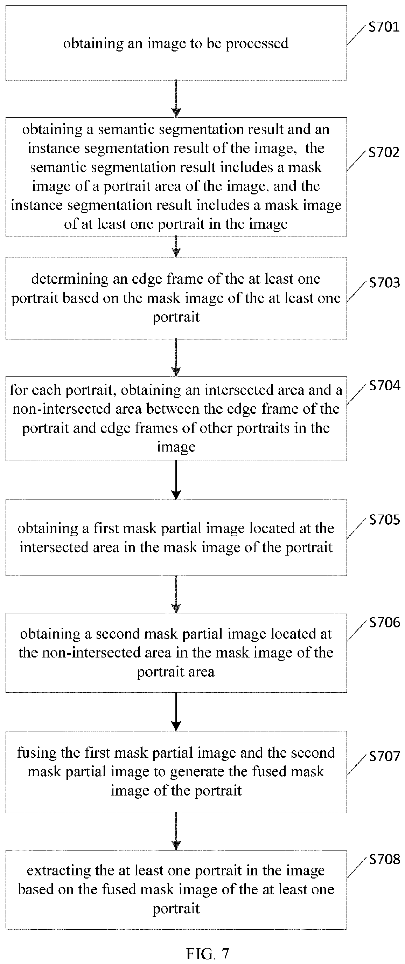

FIG. 7 is a schematic diagram according to a second embodiment of the disclosure. It should be noted that the execution subject of the embodiments of the disclosure is a portrait extracting apparatus, and the portrait extracting apparatus may be a hardware device, or software in a hardware device.

As illustrated in FIG. 7, the portrait extracting method is implemented by the following steps.

In step 701, an image to be processed is obtained.

In step 702, a semantic segmentation result and an instance segmentation result of the image are obtained, the semantic segmentation result includes a mask image of a portrait area of the image, and the instance segmentation result includes a mask image of at least one portrait in the image.

In step 703, the mask image of the at least one portrait and the mask image of the portrait area are fused to generate a fused mask image of the at least one portrait.

In an embodiment, the method of obtaining the edge frame of the portrait may be, for example, obtaining a coordinate value (x, y) in the image of each pixel in the portrait. For example, x may represent a pixel distance between a pixel and the left edge of the image, y represents a pixel distance between a pixel and a bottom edge of the image. The smallest coordinate value x, the largest coordinate value x, the smallest coordinate value y and the largest coordinate value y are selected from the coordinate values, and then the edge frame of the portrait is formed by the column where the smallest coordinate value x is located, the column where the largest coordinate value x is located, the row where the smallest coordinate value y is located and the row where the largest coordinate value y is located are determined.

In step 704, for each portrait, an intersected area and a non-intersected area between the edge frame of the portrait and edge frames of other portraits in the image are obtained.

In an embodiment, for each portrait, a sub intersected area between the edge frame of the portrait and the edge frame of each other portrait in the image is obtained separately, and a total of the sub intersected areas between the portrait and each other portrait is determined as the intersected area. The non-intersected area is the area in the edge frame of the portrait excluding the intersected area.

In an embodiment, for example, the image includes portrait A, portrait B and portrait C, there is a first sub intersected area between the edge frame of portrait B and the edge frame of portrait A, and there is a second sub intersected area between the edge frame of portrait B and the edge frame of the portrait C, and the first sub intersected area and the second sub intersected area are combined to determine the intersected area.

In step 705, a first mask partial image located at the intersected area in the mask image of the portrait is obtained.

In an embodiment, since the mask image of the portrait area in the semantic segmentation result is not segmented for different portraits, and the instance segmentation result is segmented for different portraits. Therefore, for the intersected area, the example segmentation result may be used as a criterion, and the first mask partial image located in the intersected area of the mask image of the portrait may be obtained.

In step 706, a second mask partial image located at the non-intersected area in the mask image of the portrait area is obtained.

In an embodiment, in the mask image of the portrait area in the semantic segmentation result, the segmented edge is relatively fine. The segmented edge of the mask image of the portrait in the example segmentation result is not fine enough. Therefore, for the non-intersected area, the semantic segmentation result is used as the criterion, and the second mask partial image located in the non-intersected area in the mask image of the portrait area is obtained.

In step 707, the first mask partial image and the second mask partial image are fused to generate the fused mask image of the portrait.

In an embodiment, in the first mask partial image, only pixels with a value of 1 or non-zero in the intersected area exist. In the second mask partial image, and only pixels with a value of 1 or non-zero in the non- intersected area exist. Therefore, the non-zero pixels in the first mask partial image and the second mask partial image are integrated to generate the fused mask image of the portrait.

In step 708, the at least one portrait in the image is extracted based on the fused mask image of the at least one portrait.

In an embodiment, for the detailed description of step 701, step 702 and step 708, reference may be made to the embodiment shown in FIG. 1, which is not described in detail here.

In conclusion, an image to be processed is obtained. A semantic segmentation result and an instance segmentation result of the image are obtained. The semantic segmentation result includes a mask image of a portrait area of the image, and the instance segmentation result includes a mask image of at least one portrait in the image. The edge frame of the at least one portrait is determined based on the mask image of the at least one portrait. For each portrait, the intersected area and the non-intersected area between the edge frame of the portrait and edge frames of other portraits in the image are obtained. The first mask partial image located at the intersected area in the mask image of the portrait is obtained. The second mask partial image located at the non-intersected area in the mask image of the portrait area is obtained. The first mask partial image and the second mask partial image are fused to generate the fused mask image of the portrait. The at least one portrait in the image is extracted based on the fused mask image of the at least one portrait. Therefore, the semantic segmentation result and the instance segmentation result are combined to ensure that the fineness of the segmented edge is improved on the premise of segmenting different portraits in the image, thereby improving the accuracy of portrait extraction.

In order to implement the foregoing embodiments, the disclosure also provides a portrait extracting apparatus.

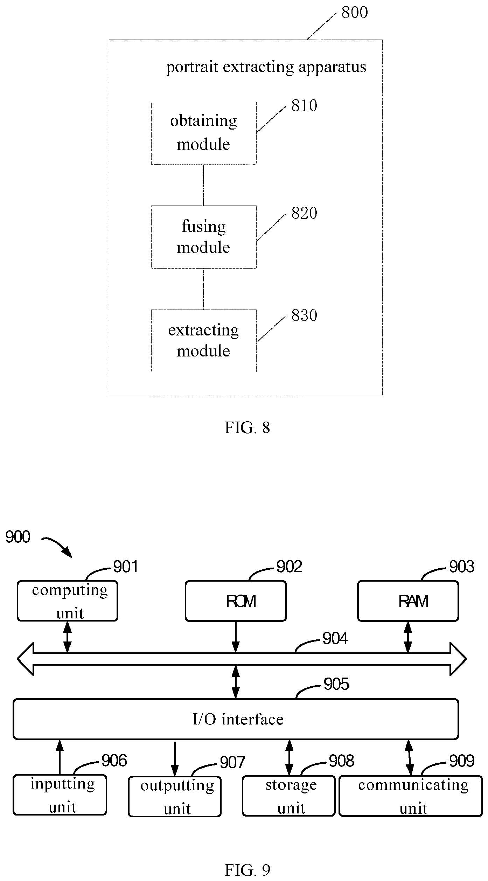

FIG. 8 is a schematic diagram according to a third embodiment of the disclosure. As illustrated in FIG. 8, the portrait extracting apparatus 800 includes: an obtaining module 810, a fusing module 820, and an extracting module 830.

The obtaining module 810 is configured to obtain an image to be processed, and obtain a semantic segmentation result and an instance segmentation result of the image, in which the semantic segmentation result includes a mask image of a portrait area of the image, and the instance segmentation result includes a mask image of at least one portrait in the image. The fusing module 820 is configured to fuse the mask image of the at least one portrait and the mask image of the portrait area to generate a fused mask image of the at least one portrait. The extracting module 830 is configured to extract the at least one portrait in the image based on the fused mask image of the at least one portrait.

In a possible implementation, the obtaining module 810 is further configured to: determine an edge frame of the at least one portrait based on the mask image of the at least one portrait; for each portrait, obtain an intersected area and a non-intersected area between the edge frame of the portrait and edge frames of other portraits in the image; obtain a first mask partial image located at the intersected area in the mask image of the portrait; obtain a second mask partial image located at the non-intersected area in the mask image of the portrait area; and fuse the first mask partial image and the second mask partial image to generate the fused mask image of the portrait.

In a possible implementation, the apparatus further includes: a scaling module, configured to scale an image in a preset size by scaling the image according to the preset size.

In a possible implementation, the obtaining module 810 is further configured to: input the image into a semantic segmentation model to obtain the semantic segmentation result of the image; and input the image into an instance segmentation model to obtain the instance segmentation result of the image.

In a possible implementation, the obtaining module 810 is configured to obtain a de-occluded background image corresponding to the image. The apparatus further includes: a first determining module and a first generating module. The first determining module is configured to determine a target location of the at least one portrait. The first generating module is configured to generate an image comprising the at least one portrait at a moved location based on the de-occluded background image, the at least one portrait, and the corresponding target location.

In a possible implementation, the obtaining module 810 is configured to obtain a de-occluded background image corresponding to the image. The apparatus further includes: a second determining module and a second generating module. The second determining module is configured to determine a first portrait to be added to the de-occluded background image from the at least one portrait, and a target location of the first portrait. The second generating module is configured to generate an image containing the first portrait based on the de-occluded background image, the first portrait, and the corresponding target location.

In conclusion, an image to be processed is obtained. A semantic segmentation result and an instance segmentation result of the image are obtained. The semantic segmentation result includes a mask image of a portrait area of the image, and the instance segmentation result includes a mask image of at least one portrait in the image. The mask image of the at least one portrait and the mask image of the portrait area are fused to generate a fused mask image of the at least one portrait. The at least one portrait in the image is extracted based on the fused mask image of the at least one portrait. By combining the semantic segmentation result with the instance segmentation result, the fineness of the segmented edges is improved on the premise of segmenting different portraits in the image, thereby improving the accuracy of portrait extraction.

According to the embodiments of the disclosure, the disclosure also provides an electronic device, a readable storage medium and a computer program product.

In the disclosure, the electronic device includes: at least one processor and a memory communicatively coupled to the at least one processor. The memory stores instructions executable by the at least one processor. When the instructions are implemented by the at least one processor, the at least one processor is caused to implement the portrait extracting method according to embodiments of the disclosure.

The disclosure provides a non-transitory computer-readable storage medium storing computer instructions. The computer instructions are used to make the computer implement the portrait extracting method according to embodiments of the disclosure.

The disclosure provides a computer program product including computer programs, and when the computer programs are executed by a processor, the portrait extracting method according to embodiments of the disclosure is implemented.

FIG. 9 is a block diagram of an example electronic device 900 configured to implement the method according to embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 9, the device 900 includes a computing unit 901 performing various appropriate actions and processes based on computer programs stored in a read-only memory (ROM) 902 or computer programs loaded from the storage unit 908 to a random access memory (RAM) 903. In the RAM 903, various programs and data required for the operation of the device 900 are stored. The computing unit 901, the ROM 902, and the RAM 903 are connected to each other through a bus 904. An input/output (I/O) interface 905 is also connected to the bus 904.

Components in the device 900 are connected to the I/O interface 905, including: an inputting unit 906, such as a keyboard, a mouse; an outputting unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks.

The computing unit 901 may be various general-purpose and/or dedicated processing components with processing and computing capabilities. Some examples of computing unit 901 include, but are not limited to, a central processing unit (CPU), a graphics processing unit (GPU), various dedicated artificial intelligence (AI) computing chips, various computing units that run machine learning model algorithms, and a digital signal processor (DSP), and any appropriate processor, controller and microcontroller. The computing unit 901 executes the various methods and processes described above, for example, the portrait extracting method. For example, in some embodiments, the portrait extracting method may be implemented as a computer software program, which is tangibly contained in a machine-readable medium, such as the storage unit 908. In some embodiments, part or all of the computer program may be loaded and/or installed on the device 900 via the ROM 902 and/or the communication unit 909. When the computer program is loaded on the RAM 903 and executed by the computing unit 901, one or more steps of the portrait extracting method described above may be executed. Alternatively, in other embodiments, the computing unit 901 may be configured to perform the portrait extracting method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the portrait extracting method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (egg, a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system, to solve defects such as difficult management and weak business scalability in the traditional physical host and Virtual Private Server (VPS) service. The server may also be a server of a distributed system, or a server combined with a blockchain.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

## Claims

1. A portrait extracting method, comprising:
obtaining (101) an image to be processed;
obtaining (102) a semantic segmentation result and an instance segmentation result of the image, wherein the semantic segmentation result comprises a mask image of a portrait area of the image, and the instance segmentation result comprises a mask image of at least one portrait in the image;
fusing (103) the mask image of the at least one portrait and the mask image of the portrait area to generate a fused mask image of the at least one portrait; and
extracting (104) the at least one portrait in the image based on the fused mask image of the at least one portrait.

2. The method of claim 1, wherein fusing the mask image of the at least one portrait and the mask image of the portrait area to generate the fused mask image of the at least one portrait, comprises:
determining an edge frame of the at least one portrait based on the mask image of the at least one portrait;
for each portrait, obtaining (704) an intersected area and a non-intersected area between the edge frame of the portrait and edge frames of other portraits in the image;
obtaining (705) a first mask partial image located at the intersected area in the mask image of the portrait;
obtaining (706) a second mask partial image located at the non-intersected area in the mask image of the portrait area; and
fusing (707) the first mask partial image and the second mask partial image to generate the fused mask image of the portrait.

3. The method of claim 1 or 2, wherein before obtaining the semantic segmentation result and the instance segmentation result of the image, the method further comprises:
obtaining an image in a preset size by scaling the image according to the preset size.

4. The method of any of claims 1 to 3, wherein obtaining the semantic segmentation result and the instance segmentation result of the image comprises:
inputting the image into a semantic segmentation model to obtain the semantic segmentation result of the image; and
inputting the image into an instance segmentation model to obtain the instance segmentation result of the image.

5. The method of any of claims 1 to 4, wherein after extracting the at least one portrait in the image based on the fused mask image of the at least one portrait, the method further comprises:
obtaining a de-occluded background image corresponding to the image;
determining a target location of the at least one portrait; and
generating an image comprising the at least one portrait at a moved location based on the de-occluded background image, the at least one portrait, and the corresponding target location.

6. The method of any of claims 1 to 5, wherein after extracting the at least one portrait in the image based on the fused mask image of the at least one portrait, the method further comprises:
obtaining a de-occluded background image corresponding to the image;
determining a first portrait to be added to the de-occluded background image from the at least one portrait, and a target location of the first portrait; and
generating an image containing the first portrait based on the de-occluded background image, the first portrait, and the corresponding target location.

7. A portrait extracting apparatus, comprising:
an obtaining module (810), configured to obtain an image to be processed;
the obtaining module (810), further configured to obtain a semantic segmentation result and an instance segmentation result of the image, wherein the semantic segmentation result comprises a mask image of a portrait area of the image, and the instance segmentation result comprises a mask image of at least one portrait in the image;
a fusing module (820), configured to fuse the mask image of the at least one portrait and the mask image of the portrait area to generate a fused mask image of the at least one portrait; and
an extracting module (830), configured to extract the at least one portrait in the image based on the fused mask image of the at least one portrait.

8. The apparatus of claim 7, wherein the obtaining module (810) is further configured to:
determine an edge frame of the at least one portrait based on the mask image of the at least one portrait;
for each portrait, obtain an intersected area and a non-intersected area between the edge frame of the portrait and edge frames of other portraits in the image;
obtain a first mask partial image located at the intersected area in the mask image of the portrait;
obtain a second mask partial image located at the non-intersected area in the mask image of the portrait area; and
fuse the first mask partial image and the second mask partial image to generate the fused mask image of the portrait.

9. The apparatus of claim 7 or 8, further comprising:
a scaling module, configured to scale an image in a preset size by scaling the image according to the preset size.

10. The apparatus of any of claims 7 to 9, wherein the obtaining module (810) is further configured to:
input the image into a semantic segmentation model to obtain the semantic segmentation result of the image; and
input the image into an instance segmentation model to obtain the instance segmentation result of the image.

11. The apparatus of any of claims 7 to 10, further comprising:
the obtaining module (810), configured to obtain a de-occluded background image corresponding to the image;
a first determining module, configured to determine a target location of the at least one portrait; and
a first generating module, configured to generate an image comprising the at least one portrait at a moved location based on the de-occluded background image, the at least one portrait, and the corresponding target location.

12. The apparatus of any of claims 7 to 11, wherein the apparatus further comprises:
the obtaining module (810), configured to obtain a de-occluded background image corresponding to the image;
a second determining module, configured to determine a first portrait to be added to the de-occluded background image from the at least one portrait, and a target location of the first portrait; and
a second generating module, configured to generate an image containing the first portrait based on the de-occluded background image, the first portrait, and the corresponding target location.

13. An electronic device, comprising:
at least one processor; and
a memory communicatively connected with the at least one processor; wherein,
the memory stores instructions executable by the at least one processor, and when the instructions are executed by the at least one processor, the at least one processor is caused to implement the method according to any one of claims 1 to 6.

14. A non-transitory computer-readable storage medium storing computer instructions, wherein when the computer instructions are executed, the computer is caused to implement the method according to any one of claims 1-6.

15. A computer program product comprising computer programs, wherein when the computer programs are executed by a processor, the computer is caused to implement the method according to any one of claims 1-6.
